# EUROPÄISCHE PATENTSCHRIFT

(11) **EP 2 491 274 B1**
(45) Veröffentlichungstag und Bekanntmachung des Hinweises auf die Patenterteilung: **12.11.2014**
(21) Anmeldenummer: 10763127.7
(22) Anmeldetag: 29.09.2010
(51) Int. Cl.: F16H 61/00, F15B 1/24

(54) **VORRICHTUNG ZUM IMPULSARTIGEN FREIGEBEN EINER IN EINEM SPEICHERGEHÄUSE BEVORRATBAREN FLUIDMENGE**
DEVICE FOR THE PULSED RELEASE OF AN AMOUNT OF FLUID WHICH CAN BE STORED IN AN ACCUMULATOR HOUSING
DISPOSITIF POUR LIBÉRER DE MANIÈRE PULSÉE UN VOLUME DE FLUIDE STOCKÉ DANS UN CARTER D'ACCUMULATEUR

(30) Priorität: 19.10.2009 DE 102009050847; 19.10.2009 DE 102009050848; 19.10.2009 DE 102009050833
(43) Veröffentlichungstag der Anmeldung: 29.08.2012
(73) Patentinhaber: Hydac Technology Gmbh, 66280 Sulzbach / Saar (DE)
(72) Erfinder: LANGE, Norbert, 66113 Saarbrücken (DE); WEBER, Norbert, 66280 Sulzbach/Saar (DE)
(74) Vertreter: Bartels & Partner
(86) Internationale Anmeldenummer: PCT/EP2010/005924
(87) Internationale Veröffentlichungsnummer: WO 2011/047775

(56) Entgegenhaltungen:
- DE-A1-102006 014 756
- DE-A1-102007 000 637
- US-A- 5 474 042

## Beschreibung

Die Erfindung betrifft eine Vorrichtung zum impulsartigen Freigeben einer in einem Speichergehäuse bevorratbaren Fluidmenge, insbesondere zum Realisieren einer Start-Stopp-Funktion bei Automatikgetrieben, mit einem sich gegen einen ersten Energiespeicher abstützenden Kolben, der innerhalb des Speichergehäuses verfahrbar, mit dem Speichergehäuse die aufnehmbare Fluidmenge begrenzt und der mittels einer Betätigungseinrichtung angesteuert und von einer Arretiereinrichtung freigegeben, die Fluidmenge impulsartig aus dem Speichergehäuse ausschiebt, wobei die Arretiereinrichtung einzelne Rastmittel aufweist, die in ihrer verrasteten Position den Kolben in seiner vorgespannten Lage halten, und die von der Betätigungseinrichtung betätigt in einer Lösungsstellung den Kolben freigeben.

In modernen Kraftfahrzeugen wird aus Gründen der Kraftstoffeinsparung und der Minimierung von Schadstoffemissionen bei geeigneten Betriebszuständen die Verbrennungskraftmaschine abgeschaltet. Um den Fahrbetrieb trotz solch einer sogenannten Motor-Start-Stopp-Funktion zu ermöglichen, ist ein kurzer Startvorgang der Verbrennungskraftmaschine und ein sofortiger Kraftschluss in einem Fahrgetriebe des Kraftfahrzeugs erforderlich.

Bei bekannten Automatikgetrieben von Kraftfahrzeugen oder beispielsweise bei automatisierten Schaltgetrieben, welche mit nasslaufenden Lamellenkupplungen ausgeführt sind, werden die Kupplungen über eine Fluidversorgungseinrichtung nur bei laufender Verbrennungskraftmaschine ausreichend mit Hydraulikfluid versorgt. Bei Kraftschlussaufbau in solch einem Getriebe ist zunächst ein Kupplungsspiel zu überwinden und die Kupplung oder Kupplungen durch Anheben des Fluiddrucks vollständig zu schließen. Der Spielausgleich einer Kupplung sowie deren Zuschaltung in den Kraftfluss wird durch Führen einer Fluidmenge in einen Kolbenraum der hydraulisch ansteuerbaren und zuzuschaltenden Kupplungen erreicht, wobei die Fluidmenge von der Fluidversorgungseinrichtung bereitgestellt wird. Bei einer Wiederanfahrt des Kraftfahrzeugs nach Abschalten der Verbrennungskraftmaschine sind unter Umständen dann eine Mehrzahl von Schaltelementen in einem Getriebe geöffnet und zu schließen, wodurch eine unzulässig langes Zeitinterval verstreichen kann, bis ein vollständiger Kraftschluss in dem Getriebe tatsächlich hergestellt ist.

Diesem Nachteil wird bei bekannten Getrieben mit einer elektromotorisch getriebenen Hydraulikpumpe begegnet, in dem deren Fördervolumen von der Drehzahl der Verbrennungskraftmaschine unabhängig ist, und die bei fehlender Druckversorgung über die Getriebehauptpumpe im Hydrauliksystem zumindest einen Druck erzeugt, mittels dem das Kupplungsspiel ausgleichbar ist. Die elektromotorisch antreibbare Hydraulikpumpe führt allerdings zu einer Verschlechterung des Getriebewirkungsgrades und zur Verteuerung des Getriebes. Zudem bedarf es eines nicht unerheblichen zusätzlichen Bauraumbedarfs in Kraftfahrzeugen und eines konstruktiven Aufwands zur Anbindung an das Hydrauliksystem des Getriebes und an ein elektrisch Steuer- und Regelsystem.

Die DE 10 2006 014 756 A1 zeigt und beschreibt ferner eine Vorrichtung zum Speichern und impulsartigen Freigeben einer Fluidmenge eines Hydraulikfluids für eine Getriebeeinrichtung eines Fahrzeuges, mit einem von einem Speichergehäuse und einer beweglichen, als Kolben gebildeten Begrenzungseinrichtung begrenzten, und einem mit der Getriebeeinrichtung zum Austausch der Fluidmenge in Wirkverbindung bringbaren Speicherraum. Der Kolben ist innerhalb des Speicherraumes verfahrbar angeordnet und von einer Betätigungseinrichtung angesteuert. Der Kolben ist ferner von einer Arretiereinrichtung in seiner vorgespannten Position gehalten. Zu diesem Zweck weist die Arretiereinrichtung Rastmittel auf, die den Kolben in seiner gegen einen als Druckfeder gebildeten, ersten Energiespeicher in einer vorgespannten Position halten. Die Arretiereinrichtung kann von der Betätigungseinrichtung in eine Lösestellung für den Kolben gebracht werden, wobei die Fluidmenge hierbei impulsartig in die Getriebeeinrichtung, die insbesondere als ein Automatikgetriebe ausgebildet ist, eingebracht wird. Die DE 10 2007 000 637 offenbart auch alle Merkmale des Oberbegriffes des Anspruchs 1.

Mit solchen Vorrichtungen lassen sich grundsätzlich, definiert auf den Bedarf eines bestimmten Verbrauchers angepasste Fluidmengen zur Darstellung einer praxisgerechten Motor-Start-Stopp-Funktion für Automatikgetriebe, einstellen. Die bekannten Vorrichtungen bauen zumindest aufwendig oder bedürfen eines nicht unbeträchtlichen Bauraumbedarfs, welcher grundsätzlich in Kraftfahrzeugen nur selten im gewünschten Umfang zur Verfügung steht.

Des weiteren bauen Arretiereinrichtungen und die Betätigungseinrichtungen solcher Vorrichtungen regelmäßig oft unnötig komplex auf, da deren Teilezahl in Bezug auf die Darstellung der notwendigen Funktionen nicht gerade minimiert ist.

Ausgehend von diesem Stand der Technik liegt der Erfindung die Aufgabe zugrunde, eine Vorrichtung zum impulsartigen Freigeben einer in einem Speichergehäuse bevorratbaren Fluidmenge, insbesondere zur Realisierung einer Start-Stopp-Funktion bei Automatikgetrieben zu schaffen, die nicht nur funktionssicher ist und einen geringen Bauraumbedarf aufweist, sondern die einfach herzustellen und besonders robust und verschleißarm ist und insbesondere einen Dauerbetrieb, wie dies die Start-Stopp-Funktion bei Automatikgetrieben darstellt, gewährleisten kann.

Eine dahingehende Aufgabe wird mit einer Vorrichtung mit den Merkmalen des Patentanspruches 1 in seiner Gesamtheit gelöst.

Dadurch, dass gemäss dem kennzeichnenden Teil des Patentanspruches 1 in jeder Verfahrstellung des Kolbens die Rastmittel zumindest teilweise in Anlage mit einer ihnen zugewandten Innenseite des Kolbens sind, und dass für die Arretierung des Kolbens die Rastmittel in demjenigen Endbereich des Kolbens angreifen, der zu der bevorrateten Fluidmenge benachbart angeordnet ist, ist ein zusätzliches Bauteil oder mehrere Bauteile zur Vorpositionierung der Rastmittel und zur Gewährung eines sicheren Eingriffs der Rastmittel in Rastflächen zum Zwecke der Verriegelung des Kolbens in einer Position, in der das Maximum der Fluidmenge im Speichergehäuse bevorratet ist, nicht erforderlich. Der Kolben der Vorrichtung übernimmt aufgrund seiner erfindungsgemäßen Gestaltung die Vorpositionierung der Rastmittel zum Zwecke ihrer späteren Verrastung gleich mit.

Die Rastmittel werden von der Arretiereinrichtung in einer solchen Position relativ zu ihrem Speichergehäuse gehalten, das bei einer Kolbenposition im Speichergehäuse, das dem Maximum der speicherbaren und abrufbaren Fluidmenge entspricht, die Rastmittel in demjenigen Endbereich des Kolbens eingreifen, der zu der bevorrateten Fluidmenge benachbart ist. Die Rastmittel greifen demnach in der vorgespannten Position des Kolbens in der Nähe der Kolbenboden-Rückseite an. Durch diese erfindungsgemäße Gestaltung des Kolbens ist somit unter Ausnutzung des maximal möglichen Verfahrweges des Kolbens ein absolutes Maximum der speicherbaren Fluidmenge bewirkt, verbunden mit einem Minimum an Bauraumbedarf und an der Gesamtzahl der Teile der Vorrichtung.

Mit der erfindungsgemäßen Vorrichtung ist es möglich, eine durch die Größe des Speicherraums definierte Fluidmenge zur Versorgung zumindest eines Verbrauchers eines Automatikgetriebes bereitzustellen, und impulsartig in der Weise in das Automatikgetriebe einzuleiten, dass ein von einem Fahrer eines Kraftfahrzeuges nicht merklich wahrnehmbares Zeitinterval verstreicht, bis nach einem Start einer Verbrennungskraftmaschine des Kraftfahrzeugs Getriebeschaltfunktionen oder Kupplungsfunktionen zur Verfügung stehen. Die Vorrichtung baut dabei sehr betriebssicher auf, so dass stets und über eine lange Lebensdauer des Kraftfahrzeugs eine sofortige Fahrbereitschaft nach einem Stopp der Verbrennungskraftmaschine des Kraftfahrzeugs möglich ist.

Bei einem bevorzugten Ausführungsbeispiel der Vorrichtung ist eine Halteeinrichtung für die Rastmittel vorgesehen, die Teil der Arretiereinrichtung ist und bevorzugt gehäusefest an dem Speichergehäuse angeordnet ist. Die Halteeinrichtung übernimmt zusätzlich die Funktion der Führung oder Positionierung der Betätigungseinrichtung. Bevorzugt ist die Halteeinrichtung derart aufgebaut, dass diese zumindest Komponenten der Betätigungseinrichtung führt, bzw. dass die, die Rastmittel ansteuernde Betätigungseinrichtung verfahrbar relativ zu der Halteeinrichtung gestaltet ist. Die erfindungsgemäße Vorrichtung zum impulsartigen Freigeben einer in einem Speichergehäuse bevorrateten Fluidmenge zeichnet sich somit durch eine Mehrfachnutzung einzelner Komponenten in Bezug auf verschiedene in einer Komponente vereinigte Funktionen aus, was sich vorteilhaft auf eine Minimierung der Teilezahl und somit der Herstellungskosten und Montagekosten positiv bemerkbar macht. Durch die verringerte Teilezahl sind zudem Störungen in dem Betrieb der erfindungsgemäßen Vorrichtung nahezu ausgeschlossen.

Wie die vorangegangene Ausführungen verdeutlichen, ist insbesondere in der Gestalt des Kolbens eine verbesserte Funktion der Vorrichtung begründet. So sind in einem Endbereich des Kolbens entlang seiner Innenwandseite bevorzugt in der Nähe des Bodens des Kolbens Rastflächen vorgesehen, die in verrastetem Eingriff mit den Rastmitteln bringbar sind und bei einer Verrastung im Kolben gegen Wirkung des ersten Energiespeichers halten. Der Kolben nimmt dabei eine Position ein, die einem Maximum der zu bevorrateten Fluidmenge im Speichergehäuse entspricht. Die Rastmittel und Rastflächen, wie insgesamt die ganze Arretierungseinrichtung mit Betätigungseinrichtung, sind dabei verschleißfest in dem Sinne gestaltet, dass sie eine Anzahl an Arbeitszyklen überstehen, die zumindest der Standzeit derjenigen Komponente eines Hydrauliksystems, insbesondere eines Automatikgetriebes, entspricht, mit der die Vorrichtung in Wechselwirkung ist.

Wird die Verrastung des Kolbens an der Halteeinrichtung der Rastmittel aufgehoben, so wird der Kolben unter Entspannung des ersten Energiespeichers impulsartig in eine Position in dem Speichergehäuse verschoben, die einem Minimum der bevorrateten Fluidmenge entspricht. Dabei werden die Rastmittel durch die an der Halteeinrichtung bevorzugt geführte Betätigungseinrichtung in ihre verrastete Position gebracht. Die in dem Speichergehäuse befindliche Fluidmenge wird schlagartig ausgeschoben und steht sofort einem hydraulischen Verbraucher nach der Anforderung einer Startfunktion für eine Verbrennungskraftmaschine des Kraftfahrzeugs zur Verfügung.

Der hydraulische Verbraucher ist somit nahezu zeitgleich mit der Verbrennungskraftmaschine in einer betriebsbereiten Situation und bevorzugt in der Lage Schaltvorgänge und dergleichen in einem Automatikgetriebe zu realisieren. Dadurch ist ein Betrieb eines Kraftfahrzeuges mit einer Start-Stopp-Funktion ohne wesentliche Beeinträchtigung des Fahrers ermöglicht.

Grundsätzlich kann die Betätigungseinrichtung ein hydraulisch oder pneumatisch arbeitendes System oder ein mechanisches System bilden. Bei einem besonders bevorzugten Ausführungsbeispiel ist ein Magnetsystem, bevorzugt ein Elektromagnetsystem, vorgesehen, das zur Betätigung des Betätigungsstößels herangezogen wird. Der Betätigungsstößel kann sowohl in der Art eines Ankers durch eine elektromagnetische Spule in eine oder mehrere Positionen verfahren und in diesen gehalten werden. Es ist jedoch zweckmäßig, einen zweiten Energiespeicher vorzusehen, der den Betätigungsstößel bei nicht betätigtem - vorzugsweise im unbestromten - Zustand einer elektromagnetischen Spule in einem Ausgangszustand hält. Dieser Ausgangszustand des Betätigungsstößels ist dabei vorzugsweise dadurch definiert, dass die Rastmittel in Eingriff mit dem Endbereich des Kolbens sind.

Die Rastflächen, welche in Wechselwirkung mit den Rastmitteln an der Halteeinrichtung im Sinne einer Verrastung des Kolbens treten, sind an einem Endbereich des Innenumfangs des Kolbens angeordnet. Sie sind bei einem besonders bevorzugten Ausführungsbeispiel an einem Übergang zwischen einer zylindrischen Führungsfläche am Innenumfang des Kolbens, hin zu einer sich im Durchmesser verbreiternden Rastkammer gebildet. Bevorzugt sind für die Rastflächen Schrägflächen vorgesehen, auf denen die Rastmittel abgleitend oder abrollend von einer nicht verrasteten Position in eine verrastete Stellung und umgekehrt verfahren werden können. Durch die Wahl des Winkels der Schrägflächen relativ zu den übrigen zylindrischen Führungsflächen lässt sich ein geräuscharmes, reproduzierbares Verrasten ohne irgendeine Behinderung durch Klemmen oder Hemmung der Rastmittel erreichen. Zudem ist durch diese konstruktive Maßnahme ein nahezu verschleißfreier Betrieb der Vorrichtung über lange Zeiträume ermöglicht.

Die Halteeinrichtung ist bei einem besonders zweckmäßigen Ausführungsbeispiel als Hohlzylinder gebildet, der stationär relativ zu dem Speichergehäuse angeordnet ist und mit diesem bevorzugt direkt fest verbunden ist.

Die Halteeinrichtung für die Rastmittel übernimmt dabei vorteilhaft die Führung zumindest des Betätigungsstößels der Betätigungseinrichtung. Es können weitere, nicht explizit genannte Komponenten, der Betätigungseinrichtung an der Halteeinrichtung geführt werden.

Es ist zweckmäßig, insbesondere wenn die Halteeinrichtung als Hohlzylinder oder als bolzen- oder stiftartiges Element gebildet ist, das sich in der Bewegungsrichtung des Kolbens erstreckt, an dem Außenumfang der Halteeinrichtung einen Anschlag auszubilden, der in Anlage mit einem freien Ende des Kolbens gelangt, wenn der Kolben sich in einer Position befindet, die dem Maximum des Volumens der Fluidmenge in dem Speichergehäuse entspricht. Der Kolben kann sich dabei in dieser Position, die er bei vorgespanntem, ersten Energiespeicher annimmt, an dem Anschlag abstützen. Der Kolben ist auf diese Weise in seinen beiden Endpositionen stets im Speichergehäuse so fixiert, dass beispielsweise Vibrationen, die auf die Vorrichtung durch den Betrieb der Verbrennungskraftmaschine übertragen werden, keine weiteren Betriebsgeräusche der Vorrichtung generieren. Zudem ist dadurch sichergestellt, dass immer ein reproduzierbar exaktes Speichervolumen der Fluidmenge von der Vorrichtung zur Verfügung gestellt werden kann.

Die Rastmittel sind bevorzugt als Wälzkörper, insbesondere als Rastkugeln gebildet. Insbesondere die standardisierten Oberflächenhärten von Wälzkörpern haben einen positiven Einfluss auf die Serienfertigung und die Konstruktionsausführung der Vorrichtung. Die Wälzkörper oder Rastkugeln sind ohne weiteres in käfigartigen Ausnehmungen in der Halte- und/oder Arretiereinrichtung aufnehmbar. Es kann zweckmäßig sein, bei einer geänderten Ausführungsform anstelle von Wälzkörpern beispielsweise kipphebelartige Rastnocken einzusetzen, die an ihrem einen freien Ende in einer Aufnahme der Halteeinrichtung geführt sind und die mit ihrem anderen freien Ende von der Betätigungseinrichtung ansteuerbar gelagert sind. Mit spezifisch in ihrer Gestalt für den jeweiligen Einsatzzeck gefertigten Rastnocken lässt sich ein optimiertes, kurvengetriebeartiges Zusammenwirken der Rastmittel mit der Betätigungseinrichtung und dem Kolben bewirken, wodurch unter Umständen die Ausschubbewegung des Kolbens und damit die Ansprechgeschwindigkeit der Vorrichtung noch weiter verbessert wird. Insbesondere ist dergestalt ein sanftes Ansprechverhalten für die Verriegelungseinrichtung gewährleistet.

Ein sicherer Betrieb der Vorrichtung wird noch dahingehend weiter unterstützt, dass der erste Energiespeicher entlang des Außenumfanges des Kolbens von dem Kolben und der Halteeinrichtung geführt ist und dass der zweite Energiespeicher in der Halteeinrichtung, insbesondere in dem Hohlzylinder, geführt ist und dabei den Betätigungsstößel umgreift. Die Energiespeicher sind bevorzugt als Druckfedern und insbesondere als zylindrische Schraubendruckfedern ausgebildet. Deren Windungen können gleichbleibende oder mit der Länge der Federn variierende Federkonstanten aufweisen, um dergestalt optimierte Befüllvorgänge in Abhängigkeit der Gestalt und Art des zu befüllenden hydraulischen Verbrauchers zu erhalten und um beispielsweise Gasblasenerzeugung in den Verbrauchern zu unterbinden, was ansonsten zu schädigenden Kavitationswirkungen im hydraulischen Kreis führen kann.

Nachstehend ist die Erfindung anhand von in der Zeichnung dargestellten Ausführungsbeispielen im Einzelnen erläutert. Es zeigen in prinzipieller und nicht maßstäblicher Darstellung:
- Fig. 1: einen Längsschnitt durch eine Vorrichtung zum impulsartigen Freigeben einer in einem Speichergehäuse bevorratbaren Fluidmenge in mit Fluid befülltem Zustand;
- Fig. 2: einen Längsschnitt durch die Vorrichtung nach der Fig. 1 im entleerten Zustand;
- Fig. 3: einen Längsschnitt durch eine weitere Vorrichtung zum impulsartigen Freigeben einer in einem Speichergehäuse bevorratbaren Fluidmenge; und
- Fig. 4: einen Längsschnitt durch die Vorrichtung nach der Fig. 3 im entleerten Zustand.

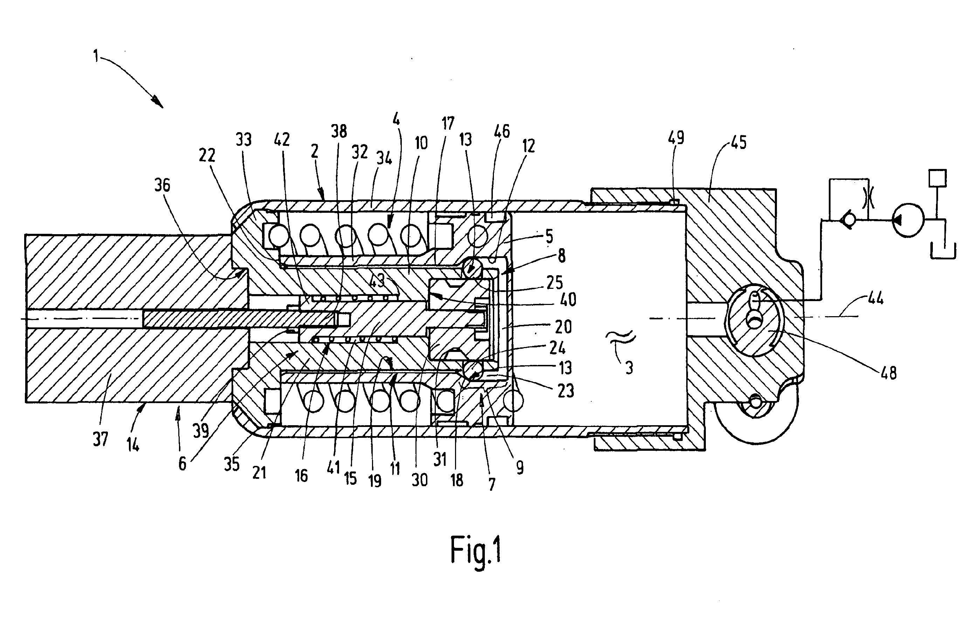

In der Fig. 1 ist in einem Längsschnitt eine Vorrichtung 1 zum impulsartigen Freigeben einer in einem Speichergehäuse 2 bevorratbaren Fluidmenge 3 gezeigt. Die Vorrichtung 1 dient zur Speicherung eines Arbeitsmittels für Verbraucher einer hydraulischen Anlage (nicht näher dargestellt), die beispielsweise zur Speicherung und impulsartigen Abgabe von Hydrauliköl für einen Schaltzylinder eines Automatikgetriebes eines Personenkraftwagens eingesetzt wird. Andere Anwendungen sind dort denkbar, wo es insbesondere darauf ankommt, impulsartig eine bestimmte Fluidmenge zur Verfügung gestellt zu bekommen.

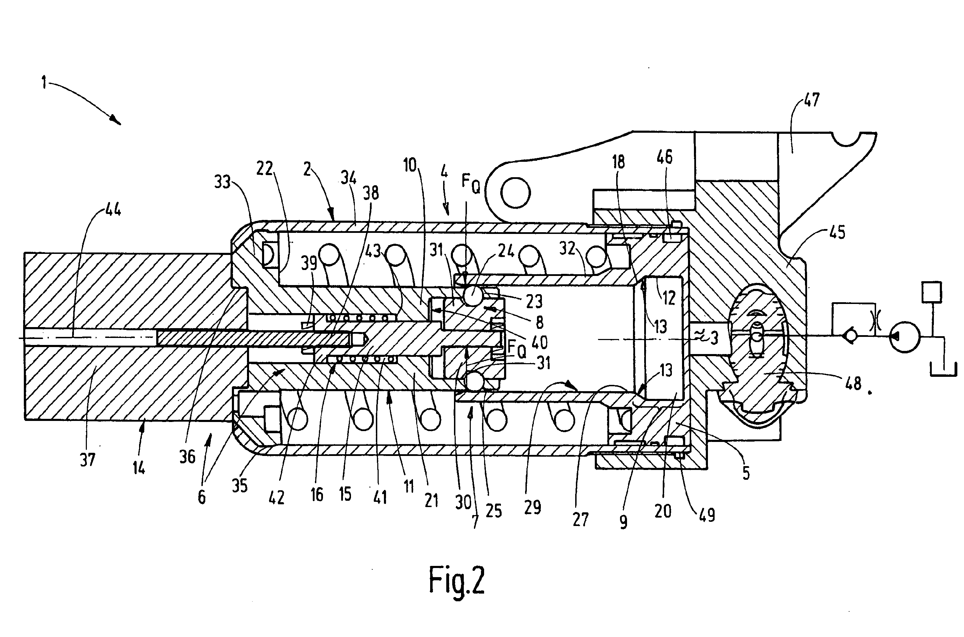

Das zylindrische Speichergehäuse 2 weist einen ersten Energiespeicher 4 auf, der als zylindrische Druckfeder ausgebildet ist. Der Energiespeicher 4 dient zur Beaufschlagung eines Kolbens 5 mit einer vorgebbaren Druckkraft, die ausreichend ist, um den Kolben 5 aus einer arretierten Position, in Fig. 1 gezeigt, in eine Position, in der die Fluidmenge 3 aus dem Speichergehäuse 2 ausgestoßen ist, impulsartig zu verfahren (vgl. Fig. 2). Die Fluidmenge 3 ist in der in Fig. 1 gezeigten Position des Kolbens 5 durch eine an sich bekannte Fluidfördereinrichtung, wie etwa einer Rotationspumpe in das Speichergehäuse 2 unter Druck eingebracht. Der Kolben 5 wird nach dem Befüllvorgang durch eine Arretiereinrichtung 7, die mit Rastmitteln 8 den Kolben 5 hält, in der gezeigten vorgespannten Position nach der Fig. 1 gehalten.

Um ein impulsartiges Ausstoßen der Fluidmenge 3 aus dem Speichergehäuse 2 zu erreichen, ist eine Betätigungseinrichtung 6 vorgesehen, mit der die Rastmittel 8 in eine Position bringbar sind, in der die Verrastung am Endbereich 9 des Kolbens 5 gelöst wird. Der Endbereich 9 des Kolbens 5, in dem die Rastmittel 8 in der verrasteten Position des Kolbens 5 eingreifen, ist der bevorrateten Fluidmenge 3 gegenüberliegend angeordnet, wodurch ein maximaler Verfahrweg des Kolbens 5 in dem Speichergehäuse 2 ermöglicht ist.

Die Rastmittel 8 sind bei den in den Fig. 1 bis 4 gezeigten Ausführungsbeispielen in einer axial unveränderbaren Position an einer Halteeinrichtung 11 gehalten, die als Hohlzylinder 21 ausgebildet ist. Zur temporären Verrastung der Rastmittel 8 mit dem Kolben 5 und zur sicheren Einname einer lösbaren, vorgespannten Lage des Kolbens 5, weist der Kolben 5 entlang seiner Innenseite 12 Rastflächen 13 auf, die in verrastendem Eingriff mit den Rastmitteln 8 bringbar sind (vgl. Fig. 1).

Die in den Fig. 1 bis 4 gezeigten Betätigungseinrichtungen 6 sind im Wesentlichen aus einem mehrgliedrigen, stufenzylinderartigen Betätigungsstößel 15 gebildet, der von einem Magnetsystem 14 axial geführt, in der Halteeinrichtung 11 axial verfahrbar ist. In der Fig. 2 ist der Betätigungsstößel 15 in einem Ausgangszustand gezeigt, in der er von einem zweiten, als Schraubendruckfeder gebildeten Energiespeicher 16 gehalten ist, wobei die Rastmittel 8 außer Eingriff mit dem Endbereich 9 des Kolbens 5 sind und der zweite Energiespeicher 16 eine maximale Länge aufweist.

In den in den Fig. 1 bis 4 gezeigten Ausführungsbeispielen der Vorrichtung 1 sind die Rastflächen 13 entlang des zylindrischen Innenumfangs 17 des Endbereiches 9 des Kolbens 5 angeordnet und insbesondere durch einen linearen Übergang 18 zwischen zylindrischen Führungsflächen 19 des Kolbens 5 und einer sich im Durchmesser erweiternden Rastkammer 20 gebildet. Insoweit bildet der Innenumfang 17 und die genannte Innenseite 12 Teile der den Rastmitteln 8 zugewandten Innenwand des Kolbens 5 aus. Die Rastkammer 20 ist wiederum axial von dem Boden des Kolbens 5 begrenzt, so dass insgesamt dadurch ein maximal möglicher Verfahrweg des Kolbens 5 erreicht ist, bevor hier die Verrastung erfolgt. Der Kolben 5 ist in der in Fig. 1 gezeigten, verrasteten Position mit seinem, der Fluidmenge 3 abgewandten freien Ende an einem Anschlag 22 am Außenumfang der Halteeinrichtung 11 anliegend und ist derart axial unverschiebbar zwischen den Rastmitteln 8 und dem Anschlag 22 gehalten.

Die Fig. 1 und 2 zeigen Beispiele, in denen die Rastmittel 8 als Wälzkörper 23, insbesondere Rastkugeln 24, ausgebildet sind, die in ihrer axialen Position durch käfigartige Ausnehmungen 25 in einem Endbereich der Halteeinrichtung 11 gehalten sind. Die Rastkugeln 24 stützen sich entweder radial an den Rastflächen 13 ab, die als etwa 45-Grad-Schrägflächen von der Halteeinrichtung 11 abweisend, an dem die Rastkammer 20 bildenden Endbereich 9 des Kolbens 5 gebildet sind (vgl. Fig. 1), oder die Rastkugeln 24 stützen sich an der Innenseite 9 des Kolbens 5 an den zylindrischen Führungsflächen 19 des Kolbens 5 selbst ab. Radial in Richtung auf den Betätigungsstößel 15 hin gesehen, stützen sich die Rastkugeln 24 an einem zylindrischen verdickten Steuerteil 30 des Betätigungsstößels 15 ab. Das Steuerteil 30 weist eine Umfangsnut 31 auf, deren Flanken Rast- oder Schrägflächen für die Veränderung der radialen Position der Rastkugeln 24 bilden. Die Schrägflächen oder Flanken der Umfangsnut 31 in dem Steuerteil 30 sind derart geformt, dass bei einer relativen Verfahrbewegung des Steuerteils 30 zu den käfigartigen Ausnehmungen 25 in der Halteeinrichtung 11 die Rastkugeln 24 radial nach außen gedrückt werden, jedoch in den Ausnehmungen 25 verbleiben, sobald die Rastflächen 13 in der Rastkammer 20 des Kolbens 5 in die Nähe der Ausnehmung 25 gelangen oder kongruent zu den käfigartigen Ausnehmungen 25 sind.

In den in den Fig. 1 bis 4 gezeigten Ausführungsbeispielen ist die Halteeinrichtung 11 als Zylinder ausgebildet, der einen etwa halb so großen Außendurchmesser aufweist, wie das Speichergehäuse 2. Der Kolben 5 ist auf seiner, der Fluidmenge 3 abgewandten Seite als zylinderförmige Hülse 32 geformt, wobei die Hülse 32 einstückig mit dem Kolben 5 verbunden ist. Die Hülse 32 gleitet auf dem Außenumfang der Halteeinrichtung 11. Die Halteeinrichtung 11 ist der einfacheren Darstellung wegen, einstückig mit einem Deckel 33 ausgebildet gezeigt, der das Speichergehäuse 2 zu dem Magnetsystem 14 hin abschließt. Die Wand 34 des Speichergehäuses 3 ist mit dem Deckel 33 verbördelt, wobei ein radialer, zu der Wand 34 gerichteter Umfangswulst 35 an dem Deckel 33 in die Wand 34 eingepasst ist und derart eine zusätzliche formschlüssige Verbindung zwischen dem Deckel 33 und der Wand 34 ausbildet.

Ferner weist der Deckel 33 eine zylindrische Aufnahme 36 zum Zentrieren des an dem Deckel 33 angeflanschten Elektromagneten 37 des Magnetsystems 14 auf. Der Betätigungsstößel 15 ist mit einem nicht näher gezeigten Anker des Magnetsystems 14 über eine Stellschraube 38 verbunden, so dass eine Feinjustage der Position des Betätigungsstößel 15 relativ zu der Halteeinrichtung 11 erfolgen kann. Die Stellschraube 38 ist über eine Mutter 39 in Anlage an den Betätigungsstößel 15 konternd festgelegt.

In Fig. 1 ist der Elektromagnet 37 in einem unbestromten Zustand gezeigt und der zweite Energiespeicher 16 nimmt seine gelängte Position ein, in der er das Steuerteil 30 an einen axialen Anschlag am Innenumfang der Halteeinrichtung 11 zieht. Der Anschlag 40 ist an dem freien Ende 10 der Halteeinrichtung 11 angeordnet. Der zweite Energiespeicher 16, der gleichfalls als zylindrische Druckfeder ausgebildet ist, ist in einem zylindrischen Federraum 41 zwischen dem Betätigungsstößel 15 und der Halteeinrichtung 11 angeordnet und stützt sich an einem Punkt 42 des Betätigungsstößels 15 sowie an einem ringförmigen Anschlag 43 der Halteeinrichtung 11 ab. Wird der Betätigungsstößel 15, in Draufsicht auf die Fig. 1 gesehen nach rechts, durch das Magnetsystem 14 verschoben, so verschiebt sich in gleicher Weise das Steuerteil 30 nach rechts und die Rastkugeln 24 können in die Umfangsnut 31 in dem Steuerteil 30 des Betätigungsstößels 15 gelangen. Dies erfolgt unter der Wirkung von Querkräften F_{Q} (vgl. Fig. 2), die ständig in verrastetem Zustand des Kolbens 5 von dessen schrägen Rastflächen 13 radial in Richtung auf eine Längsachse 44 des Speichergehäuses 2 wirken.

Der Kolben 5 wird freigegeben und unter der Wirkung der Druckkraft des ersten Energiespeichers 4 impulsartig nach rechts bis zu dessen Anschlag an einen zweiten Deckel 45 des Speichergehäuses 2 bewegt. Der erste Energiespeicher 16 stützt sich dabei an dem Deckel 33 und an der Rückseite des Kolbens 5 ab, die der Fluidmenge 3 abgewandt ist. Die gesamte, in dem Speichergehäuse 2 gespeicherte Fluidmenge 3, wird derart aus dem Speichergehäuse 2 schlagartig ausgebracht und in nicht näher dargestellter Weise einem Verbraucher zugeführt (vgl. Fig. 2).

Bei allen angezeigten Ausführungsbeispielen ist ein Abdichtelement 46 in der Art eines Kolbenringes in einer Umfangsnut des Kolbens 5 angeordnet. Der zweite Deckel 45 trägt einen in Richtung der Längsachse 44 gerichteten flachen Flansch 47 zur Befestigung der Vorrichtung 1. Ferner bildet der Deckel 45 mit seinem dickwandigen Boden eine Aufnahme für ein nicht näher dargestelltes Einschraubventil 48 aus, das ein Rückschlagventil und eine Druckbegrenzungsventil oder Stromregelventil umfassen kann. Der Deckel 45 kann geschraubt auf dem Speichergehäuse 2 unter Zwischenlage eines Dichtelementes 49 befestigt sein, wie dies die Fig. 1 bis 4 verdeutlichen.

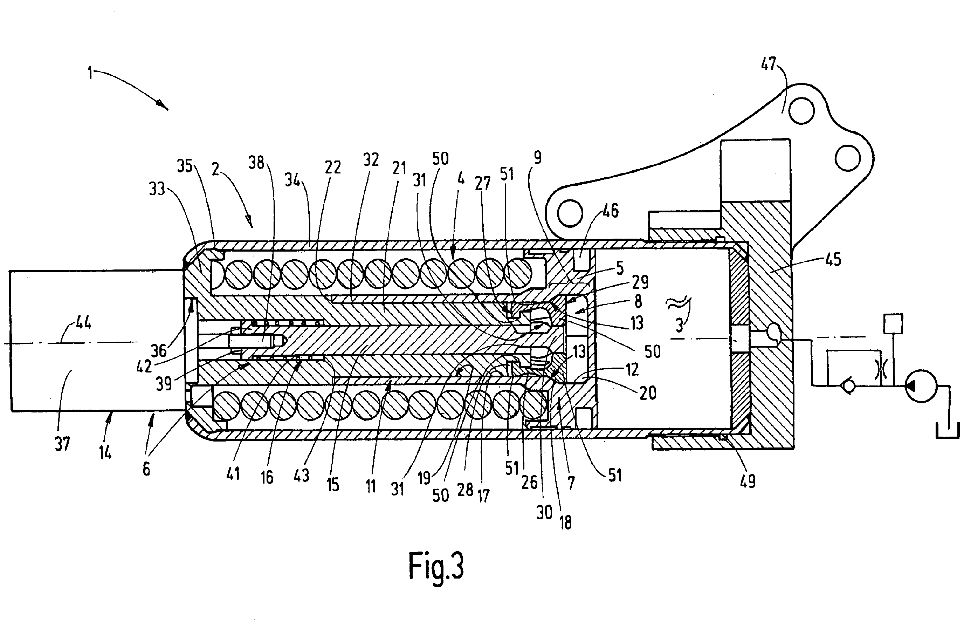

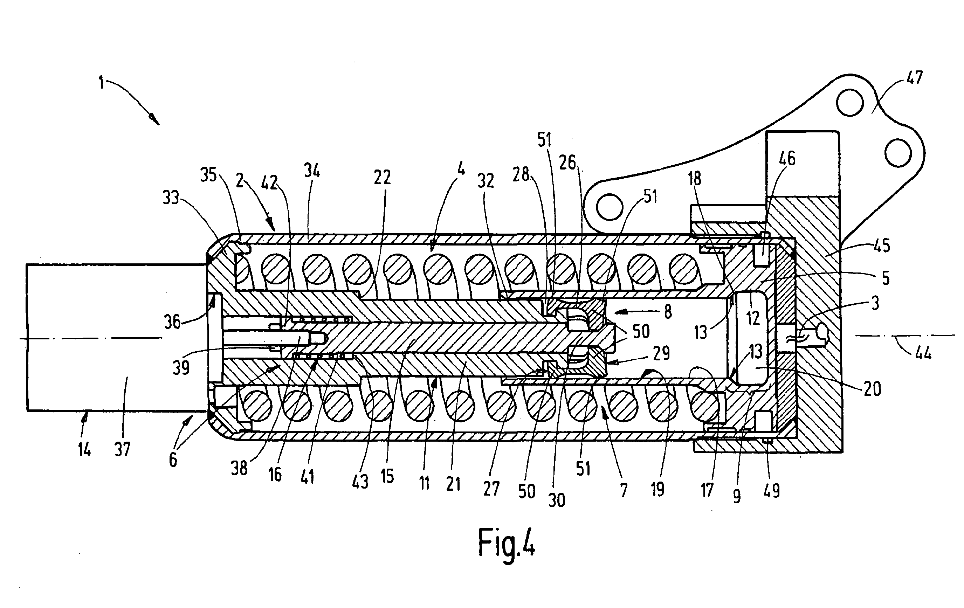

In den Fig. 3 und 4 sind je ein Längsschnitt durch eine prinzipiell ähnlich bauende Vorrichtung 1 zum impulsartigen Freigeben einer in einem Speichergehäuse 2 bevorratbaren Fluidmenge 3 gezeigt, die sich jedoch im Aufbau der Halteeinrichtung 11, der Arretiereinrichtung 7 sowie der Betätigungseinrichtung von dem Ausführungsbeispiel nach den Fig. 1 und 2 unterscheidet.

Der Betätigungsstößel 15 weist über seine Länge eine nahezu gleichbleibenden Außendurchmesser auf und ist einstückig mit seinem endseitigen Steuerteil 30 gebildet. Eine Umfangsnut 31 in dem Steuerteil 30 weist eine größere Breite auf als bei dem Ausführungsbeispiel nach den Fig. 1 und 2. Die Rastmittel 18 sind als im Längsschnitt schienenprofilartige, in der Art von Kipphebeln ausgebildeten Rastnocken 26 geformt. Die Rastnocken 26 weisen ein erstes freies Ende 27 auf, mit dem diese in eine als radial äußere Umfangsnut gebildete Aufnahme 28 an dem Ende 10 der Halteeinrichtung 11 schwenkbar gehalten sind. Mit ihrem jeweils anderen freien Ende 29 sind die Rastnocken, von denen lediglich zwei von einer Vielzahl gezeigt sind, in der Umfangsnut 31 in dem Steuerteil 30 eingreifend geführt. Die in die Aufnahme 28 bzw. Umfangsnut 31 eingreifenden Rastnasen 50 der Rastnocken 26 sind asymmetrisch aufgebaut und weisen kleinere Rastnasen 51 auf, die radial nach außen gerichtet sind, mit denen die Rastnocken 26 an der Innenseite 12 des Kolbens 5 entlang gleiten können. In Fig. 3 ist eine Kolbenposition des Kolbens 5 gezeigt, der dem Maximum der Fluidmenge 3 in dem Speichergehäuse 2 entspricht, wobei der Betätigungsstößel 15 durch eine Expansion des zweiten Energiespeichers 16 bewirkt, in einem zu dem Magnetsystem 14 verfahrene Position einnimmt.

Durch diese Verfahrbewegung des Betätigungsstößels 15 ist die Rastnase 50, welche dem Kolben 5 zugewandt, aus ihrer in der Umfangsnut 31 liegenden Position (vgl. Fig. 4) verdrängt und radial nach außen an die ebenfalls als Schrägflächen gebildeten Rastflächen 13 in der Rastkammer 20 bewegt. Es erfolgt eine Verrastung des Kolbens 5 hierdurch. In der Fig. 4 ist der Betätigungsstößel 15 durch den Elektromagnet 37, in Draufsicht auf die Fig. 4 gesehen, nach rechts bewegt, wodurch die Rastnase 50 in die Umfangsnut 31 in dem Steuerteil 30 des Betätigungsstößels 50 einfallen kann und hierbei den Kolben 5 freigibt. Der Kolben 5 ist dadurch in der Lage, unter Wirkung des ersten Energiespeichers 4, die Fluidmenge 3 impulsartig freizugeben.

## Patentansprüche

1. Vorrichtung zum impulsartigen Freigeben einer in einem Speichergehäuse (2) bevorratbaren Fluidmenge (3), insbesondere zum Realisieren einer Start-Stopp-Funktion bei Automatikgetrieben, mit einem sich gegen einen ersten Energiespeicher (4) abstützenden Kolben (5), der innerhalb des Speichergehäuses (2) verfahrbar mit diesem die aufnehmbare Fluidmenge (3) begrenzt und der mittels einer Betätigungseinrichtung (6) angesteuert und von einer Arretiereinrichtung (7) freigegeben, die Fluidmenge (3) impulsartig aus dem Speichergehäuse (2) ausschiebt, wobei die Arretiereinrichtung (7) einzelne Rastmittel (8) aufweist, die in ihrer verrasteten Position den Kolben (5) in seiner vorgespannten Lage halten, und die von der Betätigungseinrichtung (6) betätigt in einer Lösestellung den Kolben (5) freigeben, **dadurch gekennzeichnet, dass** in jeder Verfahrstellung des Kolbens (5) die Rastmittel (8) zumindest teilweise in Anlage mit einer ihnen zugewandten Innenwand des Kolbens (5) sind, und dass für die Arretierung des Kolbens (5) die Rastmittel (8) in demjenigen Endbereich (9) des Kolbens (5) angreifen, der zu der bevorrateten Fluidmenge (3) benachbart angeordnet ist.

2. Vorrichtung nach Anspruch 1, **dadurch gekennzeichnet, dass** die Rastmittel (8) der Arretiereinrichtung (7) am freien Ende (10) einer Halteeinrichtung aufgenommen sind und die, die Rastmittel (8) ansteuerbare Betätigungseinrichtung (6) relativ zu der Halteeinrichtung (11) verfahrbar gehalten ist.

3. Vorrichtung nach Anspruch 1 oder 2, **dadurch gekennzeichnet, dass** im Endbereich (9) des Kolbens (5) entlang seiner Innenseite (12) als Teil der Innenwand Rastflächen (13) angeordnet sind, die in verrastenden Eingriff mit den Rastmitteln (8) bringbar sind und bei verrastetem Eingriff der Kolben (5) gegen die Wirkung des ersten Energiespeichers (4) verschoben, ein Maximum an zu bevorratender Fluidmenge (3) von dem Speichergehäuse (2) aufgenommen ist.

4. Vorrichtung nach Anspruch 3, **dadurch gekennzeichnet, dass** unter Freigabe der Rastmittel (8) mittels der Betätigungseinrichtung (6) der Kolben (5) unter der Wirkung des ersten Energiespeichers (4) die bevorratete Fluidmenge (3) aus dem Speichergehäuse (2) impulsartig ausschiebt.

5. Vorrichtung nach einem der Ansprüche 1 bis 4, **dadurch gekennzeichnet, dass** die Betätigungseinrichtung (6) einen mittels eines Magnetsystem (14) betätigbaren Betätigungsstößel (15) aufnimmt, der unter der Wirkung eines zweiten Energiespeichers (16) bei nicht betätigtem Magnetsystem (14) in einem Ausgangszustand gehalten ist, bei dem die Rastmittel (8) in Eingriff mit dem Endbereich (9) des Kolbens (5) sind.

6. Vorrichtung nach einem der Ansprüche 1 bis 5, **dadurch gekennzeichnet, dass** die entlang des Innenumfangs (17) des Endbereichs (9) des Kolbens (5) angeordnete Rastflächen (13) durch einen Übergang (18) zwischen einer zylindrischen Führungsfläche (19) für die jeweiligen Rastmittel (8) und einer sich im Durchmesser gegenüber der Führungsfläche (19) verbreiternden Rastkammer (20) gebildet sind.

7. Vorrichtung nach einem der Ansprüche 1 bis 6, **dadurch gekennzeichnet, dass** die Halteeinrichtung (11) einen Hohlzylinder (21) ausbildet, der stationär mit dem Speichergehäuse (2) fest verbunden ist und dass in dem Hohlzylinder (21) die Betätigungseinrichtung (6) mit ihrem Betätigungsstößel (15) geführt ist.

8. Vorrichtung nach einem der Ansprüche 3 bis 7, **dadurch gekennzeichnet, dass** die Halteeinrichtung (11) entlang ihres Außenumfangs einen Anschlag (22) ausbildet, zur Anlage des dem Anschlag (22) zugewandten freien Endes (9) des Kolbens (5), der sich bei dem Maximum einer in dem Speichergehäuse (2) aufgenommenen Fluidmenge (3) am Anschlag (22) bei vorgespanntem ersten Energiespeicher (4) abstützt.

9. Vorrichtung nach einem der Ansprüche 1 bis 8, **dadurch gekennzeichnet, dass** die jeweiligen Rastmittel (8) aus Wälzkörpern (23) wie Rastkugeln (24) bestehen, die in käfigartigen Ausnehmungen (25) in der Halteeinrichtung (11) aufgenommen sind.

10. Vorrichtung nach einem der Ansprüche 1 bis 8, **dadurch gekennzeichnet, dass** die jeweiligen Rastmittel (8) aus kipphebelartigen Rastnocken (26) bestehen, die an ihrem einen freien Ende (27) in einer Aufnahme (28) der Halteeinrichtung (11) geführt sind und an ihrem anderen freien Ende (29) von der Betätigungseinrichtung (6) ansteuerbar sind.

11. Vorrichtung nach einem der Ansprüche 2 bis 10, **dadurch gekennzeichnet, dass** der erste Energiespeicher (4) entlang des Außenumfangs des Kolbens (5) von dem Kolben (5) und der Halteeinrichtung (11) geführt ist und dass der zweite Energiespeicher (16) in der Halteeinrichtung (11) geführt den Betätigungsstößel (15) umgreift.

## Claims

1. A device for the pulsed release of an amount of fluid (3) that can be stored in an accumulator housing (2), in particular for implementing a start-stop function in automatic transmissions, and that comprises a piston (5) that is supported on a first energy accumulator (4) and that, being displaceable within the accumulator housing (2), limits together with the latter the amount of fluid (3) that can be accommodated and that, when actuated by means of an actuating device (6) and released by a locking device (7), pushes the amount of fluid (3) out of the accumulator housing (2) in a pulsed manner, the locking device (7) having individual catch means (8) which, in their locked together position, hold the piston (5) in its pre-stressed position and that, when actuated by the actuating device (6), release the piston (5) in a release position, **characterised in that,** in every position of the piston (5), the catch means (8) are at least partially in contact with an inner wall of the piston (5) facing towards them, and that for the locking of the piston (5) the catch means (8) engage with the end region (9) of the piston (5) which is disposed adjacent to the stored amount of fluid (3).

2. The device according to Claim 1, **characterised in that** the catch means (8) of the locking device (7) are accommodated on the free end (10) of a holding device and the actuating device (6) that can actuate the catch means (8) is held such as to be able to move relative to the holding device (11).

3. The device according to Claim 1 or 2, **characterised in that** catch surfaces (13) are disposed in the end region (9) of the piston (5) along its inside (12) as part of the inner wall, said catch surfaces being able to be locked together with the catch means (8), and when locked together, the piston (5) is shifted against the effect of the first energy accumulator (4), and a maximum of the amount of fluid (3) to be stored is received by the accumulator housing (2).

4. The device according to Claim 3, **characterised in that** when the catch means (8) are released by means of the actuating device (6), the piston (5) pushes the amount of fluid (3) stored out of the accumulator housing (2) in a pulsed manner by the effect of the first energy accumulator (4).

5. The device according to any of Claims 1 to 4, **characterised in that** the actuating device (6) accommodates an actuating plunger (15) that can be actuated by means of a magnet system (14) and that, when the magnet system (14) is not actuated, is held by the effect of a second energy accumulator (16) in an initial state wherein the catch means (8) are engaged with the end region (9) of the piston (5).

6. The device according to any of Claims 1 to 5, **characterised in that** the catch surfaces (13) arranged along the inner circumference (17) of the end region (9) of the piston (5) are formed by a cross-over (18) between a cylindrical guide surface (19) for the respective catch means (8) and a catching chamber (20) the diameter of which widens with respect to the guide surface (19).

7. The device according to any of Claims 1 to 6, **characterised in that** the holding device (11) forms a hollow cylinder (21) that is securely connected, stationarily, to the accumulator housing (2) and that in the hollow cylinder (21) the actuating device (6) is guided with its actuating plunger (15).

8. The device according to any of Claims 3 to 7, **characterised in that** the holding device (11) forms along its outer circumference a stop (22) for contact with the free end (9) of the piston (5) facing the stop (22) and which with the maximum of an amount of fluid (3) accommodated in the accumulator housing (2) is supported against the stop (22) with the pre-stressed first energy accumulator (4).

9. The device according to any of Claims 1 to 8, **characterised in that** the respective catch means (8) consist of rolling bodies (23) such as catching balls (24) which are accommodated in cage-like recesses (25) in the holding device (11).

10. The device according to any of Claims 1 to 8, **characterised in that** the respective catch means (8) consist of tilt-lever-type securing pins (26) which are guided in a retainer (28) of the holding device (11) on their one free end (27) and can be actuated by the actuating device (6) on their other free end (29).

11. The device according to any of Claims 2 to 10, **characterised in that** the first energy accumulator (4) is guided along the outer circumference of the piston (5) by the piston (5) and the holding device (11), and that the second energy accumulator (16), guided within the holding device (11), encompasses the actuating plunger (15).

## Revendications

1. Dispositif de libération de manière pulsée d'un volume (3) de fluide pouvant être mis en réserve dans un carter (2) d'accumulateur, notamment pour la réalisation d'une fonction start-stop dans des transmissions automatiques, comprenant un piston (5), qui s'appuie sur un premier accumulateur (4) d'énergie, qui, en étant déplaçable à l'intérieur du carter (2) de l'accumulateur, délimite avec celui-ci le volume (3) de fluide pouvant être reçu et qui, commandé au moyen d'un dispositif (6) d'actionnement et, en étant libéré par un dispositif (7) d'arrêt, fait sortir le volume (3) de fluide de manière pulsée du carter (2) de l'accumulateur, le dispositif (7) d'arrêt ayant des moyens (8) individuels d'encliquetage, qui, dans leur position encliquetée, maintiennent le piston (5) dans sa position précontrainte et qui, actionnés par le dispositif (6) d'actionnement, libèrent, dans une position de desserrage, le piston (5), **caractérisé en ce que**, en chaque position de déplacement du piston (5), les moyens (8) d'encliquetage sont, au moins en partie, en contact avec une paroi intérieure tournée vers eux du piston (5) et **en ce que**, pour l'arrêt du piston (5), les moyens (8) d'encliquetage attaquent la partie (9) d'extrémité du piston (5), qui est disposée au voisinage du volume (3) de fluide mis en réserve.

2. Dispositif suivant la revendication 1, **caractérisé en ce que** les moyens (8) d'encliquetage du dispositif (7) d'arrêt sont logés à l'extrémité (10) libre d'un dispositif de maintien et le dispositif (6) d'actionnement, commandant les moyens (8) d'encliquetage, est maintenu déplaçable par rapport au dispositif (11) de maintien.

3. Dispositif suivant la revendication 1 ou 2, **caractérisé en ce que**, dans la partie (9) d'extrémité du piston (5), le long de sa face (12) intérieure, sont disposées, comme parties de la paroi intérieure, des surfaces (13) d'encliquetage, qui peuvent être mises en encliquetage avec des moyens (8) d'encliquetage et, lors de l'encliquetage, le piston (5) étant déplacé à l'encontre de l'effet du premier accumulateur (4) d'énergie, un maximum du volume (3) de fluide à mettre en réserve est reçu par le carter (2) de l'accumulateur.

4. Dispositif suivant la revendication 3, **caractérisé en ce que**, en libérant les moyens (8) d'encliquetage à l'aide du dispositif (6) d'actionnement, le piston (5) fait, sous l'effet du premier accumulateur (4) d'énergie, sortir de manière pulsée du carter (2) de l'accumulateur le volume de fluide mis en réserve.

5. Dispositif suivant l'une des revendications 1 à 4, **caractérisé en ce que** le dispositif (6) d'actionnement reçoit un poussoir (15) d'actionnement, qui peut être actionné au moyen d'un système (14) magnétique et qui, sous l'effet d'un deuxième accumulateur (16) d'énergie, est, lorsque le système (14) magnétique n'est pas actionné, maintenu dans un état initial, dans lequel les moyens (8) d'encliqûetage sont encliquetés avec la partie (9) d'extrémité du piston (5).

6. Dispositif suivant l'une des revendications 1 à 5, **caractérisé en ce que** les surfaces (13) d'encliquetage, disposées le long du pourtour (17) intérieur de la partie (9) d'extrémité du piston (5), sont constituées par une transition (18) entre une surface (19) cylindrique de guidage des moyens (8) d'encliquetage respectifs et une chambre (20) d'encliquetage s'élargissant en diamètre par rapport à la surface (19) de guidage.

7. Dispositif suivant l'une des revendications 1 à 6, **caractérisé en ce que** le dispositif (11) de maintien constitue un cylindre (21) creux, qui est relié rigidement de manière stationnaire au carter (2) de l'accumulateur, et **en ce que** le dispositif (6) d'actionnement est guidé dans le cylindre (21) creux par son poussoir (15) d'actionnement.

8. Dispositif suivant l'une des revendications 3 à 7, **caractérisé en ce que** le dispositif (11) de maintien constitue, le long de son pourtour extérieur, une butée (22) pour l'application de l'extrémité (9) libre du piston (5) tourné vers la butée (22), extrémité qui, au maximum d'un volume (8) de fluide reçu dans le carter (2) de l'accumulateur, s'appuie sur la butée (22), lorsque le premier accumulateur (4) d'énergie est précontraint.

9. Dispositif suivant l'une des revendications 1 à 8, **caractérisé en ce que** les moyens (8) d'encliquetage respectifs sont constitués de corps (23) de roulement comme des billes (24) d'encliquetage, qui sont reçues dans des évidements (25) de type en cage du dispositif (11) de maintien.

10. Dispositif suivant l'une des revendications 1 à 8, **caractérisé en ce que** les moyens (8) d'encliquetage respectifs sont constitués de bossages (26) d'encliquetage du type à levier basculant, qui, sur l'une de leurs extrémités (27) libres, sont guidés dans un logement (28) du dispositif (11) de maintien et qui peuvent être commandés sur leur autre extrémité (29) libre par le dispositif (6) d'actionnement.

11. Dispositif suivant l'une des revendications 2 à 10, **caractérisé en ce que** le premier accumulateur (4) d'énergie est guidé le long du pourtour extérieur du piston (5) par le piston (5) et par le dispositif (11) de maintien et **en ce que** le deuxième accumulateur (16) d'énergie entoure, guidé dans le dispositif (11) de maintien, le piston (15) d'actionnement.
